# EUROPÄISCHE PATENTSCHRIFT

(11) **EP 0 747 530 B1**
(45) Veröffentlichungstag und Bekanntmachung des Hinweises auf die Patenterteilung: **31.01.2001**
(21) Anmeldenummer: 96106060.5
(22) Anmeldetag: 18.04.1996
(51) Int. Cl.: D21G 1/00, F16C 13/00

(54) **Walze mit Schwingungsdämpfer**
Roll with vibration damper
Rouleau avec amortisseur de vibrations

(30) Priorität: 10.06.1995 DE 29509545 U
(43) Veröffentlichungstag der Anmeldung: 11.12.1996
(73) Patentinhaber: Voith Sulzer Papiermaschinen GmbH, 89522 Heidenheim (DE)
(72) Erfinder: Schiel, Christian, 89520 Heidenheim (DE)
(74) Vertreter: Manitz, Finsterwald & Partner

(56) Entgegenhaltungen:
- EP-A- 0 330 657
- DE-A- 3 802 234
- DE-A- 4 318 035

## Beschreibung

Die Erfindung betrifft eine Walze der im Oberbegriff der Ansprüche 1 bis 3 angegebenen Art. Eine derartige Walze ist aus der EP 0 330 657, Figur 6, bekannt.

Es handelt sich also um eine Walze mit einer stationären Zentralachse und mit einem um diese Zentralachse rotierenden Walzenmantel. In der Zentralachse ist eine Reihe von z.B. zylindrischen Druckräumen vorgesehen, die sich in radialer Richtung erstrecken und je ein radial verschiebbares Stützelement aufnehmen. Jeder Druckraum kann mit einer Druckflüssigkeit gefüllt werden, die eine hydraulische Stützkraft von der Zentralachse über das Stützelement auf den Walzenmantel überträgt. Anstelle mehrerer Druckräume mit je einem Stützelement kann ein einziger langgestreckter Druckraum mit einem einzigen langgestreckten Stützelement vorhanden sein.

Zum Zuführen der Druckflüssigkeit in die Druckräume ist in der stationären Zentralachse ein beispielsweise zentral angeordneter Zuführkanal vorgesehen, der über je eine verengte Leitung (z.B. über einen Drosselkanal) mit jedem der Druckräume verbunden ist. Zum Zwecke der Dämpfung eventueller Vibrationen des Walzenmantels ist in dem Zuführkanal wenigstens ein Schlauchabschnitt vorgesehen, dessen Enden verschlossen sind und der mit einem Gas gefüllt ist. Dadurch befindet sich also in dem Zuführkanal eine komprimierbare Gasblase, wobei sich ein Gleichgewicht einstellt zwischen dem Druck der Druckflüssigkeit und dem Druck des in dem Schlauchabschnitt befindlichen Gases.

Anstelle des gasgefüllten Schlauchabschnittes kann auch ein mechanisches Bauteil vorgesehen werden, das unter dem Druck der Druckflüssigkeit verformbar ist (siehe DE-U-295 08 422). In diesen Fall stellt sich im Betrieb ein Gleichgewicht ein zwischen dem Druck der Druckflüssigkeit und einer Gegenkraft, die aus der Verformung des mechanischen Bauteils resultiert. In beiden Fällen gilt folgendes: Der Zuführkanal ist nur teilweise mit Flüssigkeit füllbar, wobei sich das mit Flüssigkeit füllbare Volumen des Zuführkanals verändern kann. Diese bekannte Einrichtung wirkt folgendermaßen:

Wenn der Walzenmantel aus irgendeinem Grund in radialer Richtung eine Schwing-Bewegung ausübt, dann resultieren daraus periodische Volumenänderungen der Druckräume und somit auch periodische Änderungen des Druckes der in den Druckräumen befindlichen Flüssigkeit. Es findet deshalb über die Drosselkanäle ein Flüssigkeits-Austausch statt zwischen den Druckräumen und dem Zuführkanal. Bei richtig bemessenen Drosselkanälen wird eine spürbare Dämpfung der Vibrationen des Walzenmantels erzielt. Eine gewisse Vibrationsdämpfung ist auch dann möglich, wenn anstelle der oben beschriebenen nachgiebigen Elemente außerhalb der Walze an den Zuführkanal für die Druckflüssigkeit ein Hydrospeicher angeschlossen ist; das ist ein Flüssigkeitsbehälter mit Druckluftpolster. Der selbe Zweck kann auch dadurch erfüllt werden, daß der in der Zentralachse befindliche Zuführkanal für die Druckflüssigkeit ein relativ großes Volumen aufweist und/oder daß an den Zentralkanal ein relativ rasch arbeitendes Druckregelventil angeschlossen wird. Alle diese Maßnahmen wirken derart, daß das zwischen der Druckflüssigkeits-Quelle und dem Drosselkanal befindliche Flüssigkeits-Volumen - bei etwa vorhandenen Walzenmantel-Vibrationen und dementsprechenden Druckschwankungen - entsprechend diesen Druckschwankungen veränderbar ist.

Ob nun die eventuell auftretenden Vibrationen des Walzenmantels in ausreichendem Maße gedämpft werden, hängt sehr stark ab von der richtigen Dimensionierung des Drosselkanals bzw. der Drosselkanäle. Dieses Problem tritt immer wieder auf; d.h., unzureichend wirksame Schwingungsdämpf-Systeme führen immer wieder zu Schwierigkeiten, beispielsweise in Papierherstellungsmaschinen. Insbesondere kann es zu Qualitäts-Einbußen in den produzierten Papierbahnen kommen. Oder die Schwingungen führen zu vorzeitigem Verschleiß an Teilen der Walze oder an benachbarten anderen Maschinenteilen.

Der vorliegenden Erfindung liegt die Aufgabe zugrunde, die bekannte Walze mit Schwingungsdämpfer dahingehend weiter zu entwickeln, daß etwa auftretende Schwingungen des Walzenmantels mit noch höherer Sicherheit als bisher beseitigt oder zumindest gedämpft werden.

Diese Aufgabe wird erfindungsgemäß durch die Kennzeichnenden Merkmale des Anspruchs 1 gelöst. In den Kennzeichen der Ansprüche 2 und 3 sind zwei weitere, alternative erfindungsgemäße Lösungen angegeben. Jeder der Ansprüche 1 bis 3 definiert eine Bemessungsregel für einen optimal gestalteten Drosselkanal. Dabei betrifft der Anspruch 1 einen Drosselkanal mit gleichbleibendem Strömungsquerschnitt. Dagegen betreffen die Ansprüche 2 bzw. 3 jeweils einen Drosselkanal mit sich kontinuierlich bzw. stufenweise veränderndem Strömungsquerschnitt. Die angegebenen Faktoren gelten für gebohrte Drosselkanäle, also mit kreisrundem Strömungsquerschnitt. Die Merkmale des Anspruchs 4 sind anwendbar, wenn der Strömungs-Querschnitt des Drosselkanals sich in Strömungsrichtung (insbesondere stufenweise) verjüngt.

Die Erfindung ist anwendbar sowohl bei hydrodynamisch geschmierten Gleitflächen zwischen den Kolben (bzw. Gleitschuhen) und dem Walzenmantel (gemäß EP 0 330 657, Fig. 6) als auch bei Vorhandensein von hydrostatischen Lagertaschen (gemäß DE 38 02 234). Sie ist auch anwendbar bei Vorhandensein nur eines einzigen Stützelements, das sich über die Länge der Walze erstreckt (US-A-3 276 102).

Ausführungsbeispiele der Erfindung werden nachfolgend an Hand der Zeichnung erläutert.

Die Figur 1 ist ein Teillängsschnitt durch eine Walze mit Schwingungsdämpfer.

Die Figur 2 ist ein Querschnitt durch Figur 1.

Die Figuren 3, 5 und 5a zeigen je eine Alternative zu Figur 2.

Die Figur 4 zeigt eine Alternative zu Figur 1.

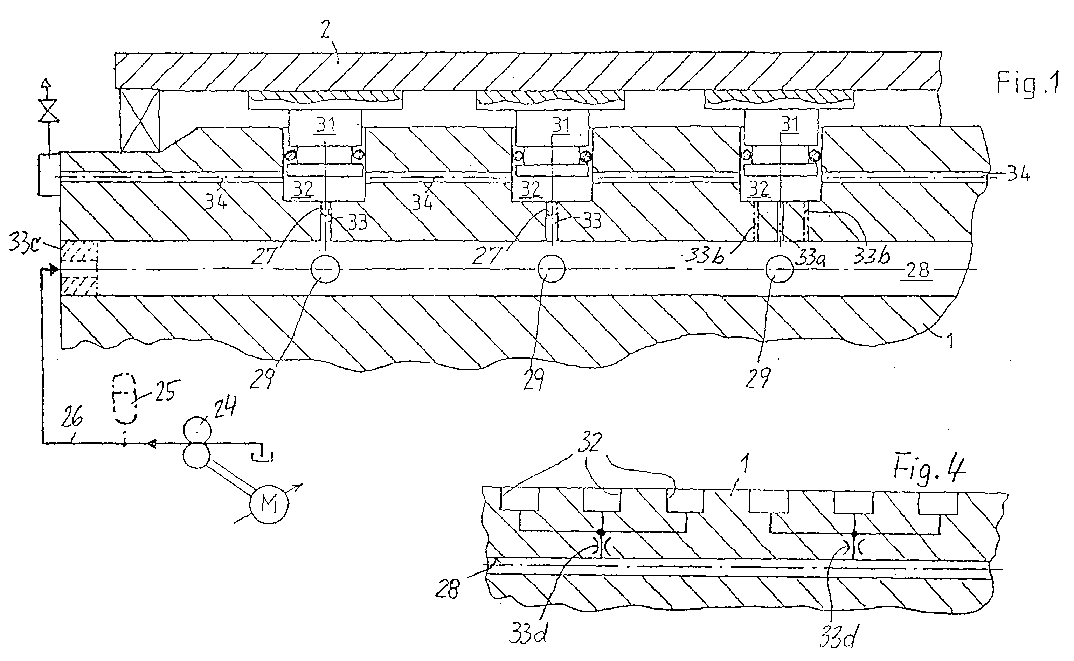

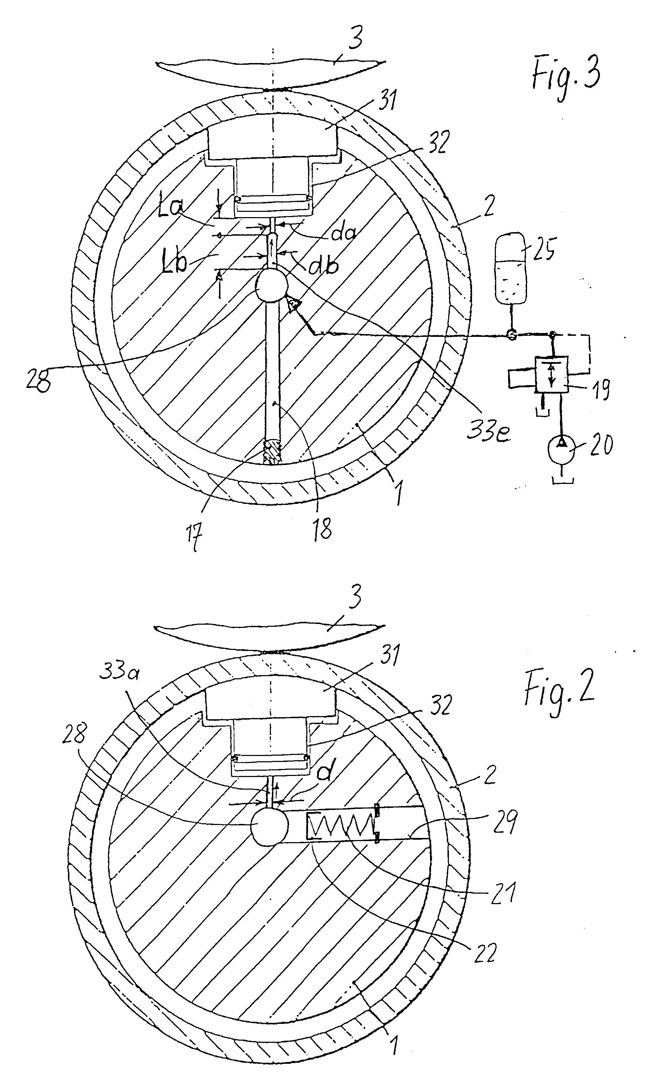

Die in den Figuren 1 und 2 dargestellte Walze hat eine stationäre Zentralachse 1 und einen um die Zentralachse umlaufenden Walzenmantel 2. In Längsrichtung durch die Zentralachse 1 erstreckt sich ein Zuführkanal 28 für Druckflüssigkeit. Die Druckflüssigkeit gelangt über mehrere radiale Bohrungen 33 in mehrere, in einer Reihe angeordnete Zylinderräume oder Druckräume 32. In jedem Zylinderraum befindet sich ein in radialer Richtung verschiebbares Stützelement 31, z.B. in Form eines Kolbens, der an seinem äußeren Ende einen Gleitschuh aufweist. Dieser hat eine an die Form des Walzenmantels 2 angepaßte konvex gekrümmte Gleitfläche. Bei Vorhandensein von Überdruck in den Zylinderräumen 32 werden die Stützelemente 31 gegen die Innenfläche des Walzenmantels 2 angedrückt. Dadurch wird der Walzenmantel 2 (der in bekannter Weise an seinen beiden Enden beispielsweise auf der stationären Zentralachse 1 gelagert ist) an eine Gegenwalze 3 angedrückt. Dabei findet eine kontrollierte Durchbiegung des Walzenmantels statt; beispielsweise wird die Durchbiegung durch Einstellen eines bestimmten Druckes in den Zylinderräumen auf dem Wert Null gehalten. Eine Entlüftungsleitung ist mit 34 bezeichnet. Da ein kleiner Anteil der Druckflüssigkeit als Leckflüssigkeit an den Dichtungen entweicht, findet durch die Bohrungen 33 ständig ein Nachströmen von Druckflüssigkeit in die Druckräume 32 statt.

Zum Zwecke der Dämpfung eventueller radialer Vibrationen des Walzenmantels 2 ist folgendes vorgesehen:

In jeder der radialen Bohrungen 33 kann ein Drosselkanal, beispielsweise in Form einer kleinen Buchse 27 angeordnet sein, wie in Fig. 1 bei 27 angedeutet. Günstiger ist es jedoch, die radiale Bohrung selbst als Drosselkanal auszubilden, wie bei 33a gezeigt ist. Jedem Druckraum 32 kann ein einziger Drosselkanal 33a zugeordnet sein. Man kann aber auch beliebig viele zusätzliche Drosselkanäle 33b vorsehen; siehe Figur 1. Eine weitere mögliche Alternative ist in Figur 1 bei 33c dargestellt; hier ist für alle Druckräume 32 eine gemeinsame Drossel vorgesehen, angeordnet beispielsweise am Beginn des die Zentralachse 1 durchdringenden Zuführkanals 28; in diesem Fall können die Buchsen 27 entfallen oder man ersetzt die Drosselkanäle 33a/33b durch eine normale Bohrung 33.

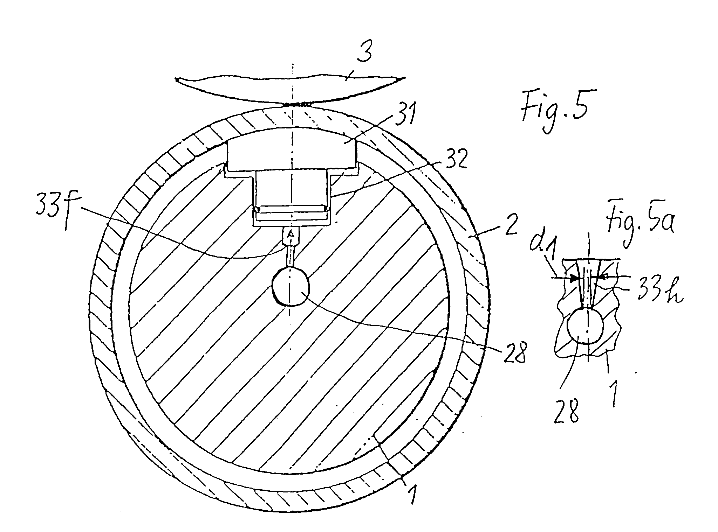

Die Figur 4 zeigt schließlich eine Variante, bei der je ein Drosselkanal 33d einer Gruppe von beispielsweise drei Druckräumen 32 zugeordnet ist.

Die Zentralachse 1 hat mehrere Querbohrungen 29, welche den Zuführkanal 28 mit dem zwischen Walzenmantel 2 und Zentralachse 1 befindlichen Ringraum verbindet. In diesem Ringraum befindet sich üblicherweise der normale Atmosphärendruck; denn der Ringraum ist an seinen Enden über nicht dargestellte Leitungen mit der Umgebung verbunden.

Damit sich bei eventuellen Vibrationen des Walzenmantels das mit Druckflüssigkeit gefüllte Volumen des Zuführkanals 28 rasch und unbehindert ändern kann, ist folgendes vorgesehen: Gemäß Figur 2 ist das Volumen des Zuführkanals 28 mittels eines in der Querbohrung 29 angeordneten Kolbens 22 begrenzt. Dieser Kolben ist mittels einer Druckfeder 21 gegen den Flüssigkeitsdruck abgestützt.

Der in Figur 2 dargestellte Drosselkanal 33a besitzt einen in Strömungsrichtung gleichbleibenden Strömungsquerschnitt.

In Figur 3 ist ein Drosselkanal 33e vorgesehen, dessen Strömungsquerschnitt sich stufenweise in Strömungsrichtung verengt, so daß er zwei aufeinanderfolgende Kanalstücke aufweist mit unterschiedlichen Durchmessern da, db und mit jeweils einer Länge La, Lb. Der Drosselkanal 33e ist von der Druckraum 32 gegenüberliegenden Gegenseite ausgehend in die Zentralachse 1 eingearbeitet.

Die Figuren 5 und 5a zeigen als weitere Varianten je einen sich in Strömungsrichtung stufenweise erweiternden Drosselkanal 33f, bzw. einen sich in Strömungsrichtung kontinuierlich erweiternden Drosselkanal 33h.

## Patentansprüche

1. Walze mit einem Schwingungsdämpfer, insbesondere als Teil eines Walzen-Paares, vorzugsweise zur Herstellung oder Behandlung von Faserstoffbahnen, insbesondere Papier- oder Kartonbahnen, mit den folgenden Merkmalen:
a) eine stationäre Zentralachse (1) erstreckt sich durch einen drehbaren Walzenmantel (2);
b) in der Zentralachse (1) ist wenigstens ein Druckraum (32) vorgesehen, in dem ein radial verschiebbares Stützelement (31) angeordnet ist;
c) der wenigstens eine Druckraum (32) ist mit einer Druckflüssigkeit füllbar, die eine hydraulische Stützkraft von der Zentralachse (1) über das Stützelement (31) auf den Walzenmantel (2) überträgt;
d) ein zumindest teilweise in der Zentralachse (1) befindlicher Zuführkanal (28) verbindet eine Druckflüssigkeitsquelle über mindestens einen Drosselkanal (33a) mit einem kreisrunden Strömungs-Querschnitt, insbesondere eine Drossel-Bohrung, mit dem wenigstens einen Druckraum (32);
e) das zwischen der Druckquelle und dem Drosselkanal (33a) befindliche Flüssigkeits-Volumen ist entsprechend eventuell auftretender Druckschwankungen veränderbar;
gekennzeichnet durch die folgenden Merkmale:
f) der Drosselkanal (33a) besitzt einen in Strömungsrichtung gleichbleibenden Strömungs-Querschnitt;
g) der Faktor d² · n⁻¹ besitzt einen Wert zwischen 6 mm² und 90 mm², wobei d der Durchmesser des Drosselkanals ist und n die Anzahl von Stützelementen ist, die einem Drosselkanal zugeordnet ist, n sowohl größer oder gleich 1 als auch kleiner als 1, d.h. durch einen Bruch gebildet sein kann, und in dem Fall, daß n ≧ ist, über einen jeweiligen Drosselkanal jeweils ein bzw. mehrere Stützelemente mit Druckflüssigkeit beaufschlagt sind, während in dem Fall, daß n durch einen Bruch gebildet ist, einem jeweiligen Stützelement jeweils mehrere parallelgeschaltete Drosselkanäle zugeordnet sind.

2. Walze mit einem Schwingungsdämpfer, insbesondere als Teil eines Walzen-Paares, vorzugsweise zur Herstellung oder Behandlung von Faserstoffbahnen, insbesondere Papier- oder Kartonbahnen, mit den folgenden Merkmalen:
a) eine stationäre Zentralachse (1) erstreckt sich durch einen drehbaren Walzenmantel (2);
b) in der Zentralachse (1) ist wenigstens ein Druckraum (32) vorgesehen, in dem ein radial verschiebbares Stützelement (31) angeordnet ist;
c) der wenigstens eine Druckraum (32) ist mit einer Druckflüssigkeit füllbar, die eine hydraulische Stützkraft von der Zentralachse (1) über das Stützelement (31) auf den Walzenmantel (2) überträgt;
d) ein zumindest teilweise in der Zentralachse (1) befindlicher Zuführkanal (28) verbindet eine Druckflüssigkeitsquelle über mindestens einen Drosselkanal (33h) mit einem kreisrunden Strömungs-Querschnitt, insbesondere eine Drossel-Bohrung, mit dem wenigstens einen Druckraum (32);
e) das zwischen der Druckquelle und dem Drosselkanal (33h) befindliche Flüssigkeits-Volumen ist entsprechend eventuell auftretender Druckschwankungen veränderbar;
gekennzeichnet durch die folgenden Merkmale:
f) der kreisrunde Strömungs-Querschnitt des Drosselkanals (33h) verändert sich kontinuierlich in Strömungsrichtung, vorzugsweise in Form einer Querschnitts-Erweiterung;
g) für den kleinsten Durchmesser d₁ des Drosselkanals gilt, daß der Faktor d₁² · n⁻¹ größer ist als 6 mm², wobei n die Anzahl von Stützelementen ist, die einem Drosselkanal zugeordnet ist, n sowohl größer oder gleich 1 als auch kleiner als 1, d.h. durch einen Bruch gebildet sein kann, und in dem Fall, daß n ≧ 1 ist, über einen jeweiligen Drosselkanal jeweils ein bzw. mehrere Stützelemente mit Druckflüssigkeit beaufschlagt sind, während in dem Fall, daß n durch einen Bruch gebildet ist, einem jeweiligen Stützelement jeweils mehrere parallelgeschaltete Drosselkanäle zugeordnet sind.

3. Walze mit einem Schwingungsdämpfer, insbesondere als Teil eines Walzen-Paares, vorzugsweise zur Herstellung oder Behandlung von Faserstoffbahnen, insbesondere Papier- oder Kartonbahnen, mit den folgenden Merkmalen:
a) eine stationäre Zentralachse (1) erstreckt sich durch einen drehbaren Walzenmantel (2);
b) in der Zentralachse (1) ist wenigstens ein Druckraum (32) vorgesehen, in dem ein radial verschiebbares Stützelement (31) angeordnet ist;
c) der wenigstens eine Druckraum (32) ist mit einer Druckflüssigkeit füllbar, die eine hydraulische Stützkraft von der Zentralachse (1) über das Stützelement (31) auf den Walzenmantel (2) überträgt;
d) ein zumindest teilweise in der Zentralachse (1) befindlicher Zuführkanal (28) verbindet eine Druckflüssigkeitsquelle über mindestens einen Drosselkanal (33e, 33f) mit einem kreisrunden Strömungs-Querschnitt, insbesondere eine Drossel-Bohrung, mit dem wenigstens einen Druckraum (32);
e) das zwischen der Druckquelle und dem Drosselkanal (33e, 33h) befindliche Flüssigkeits-Volumen ist entsprechend eventuell auftretender Druckschwankungen veränderbar;
gekennzeichnet durch die folgenden Merkmale:
f) der kreisrunde Strömungs-Querschnitt des Drosselkanals (33e, 33h) verändert sich stufenweise in Strömungsrichtung, so daß er wenigstens zwei aufeinanderfolgende Kanalstücke mit unterschiedlichen Durchmessern da, db und mit einer jeweiligen Länge La, Lb aufweist;
g) die Summe der Faktoren da⁴ /La · n^{1/4} + db⁴ /Lb · n^{1/4} + ... einen Wert zwischen 1 und 50 mm³, vorzugsweise zwischen 2 und 25 mm³, besitzt, wobei n die Anzahl von Stützelementen ist, die einem Drosselkanal zugeordnet ist, n sowohl größer oder gleich 1 als auch kleiner als 1, d.h. durch einen Bruch gebildet sein kann, und in dem Fall, daß n ≧ 1 ist, über einen jeweiligen Drosselkanal jeweils ein bzw. mehrere Stützelemente mit Druckflüssigkeit beaufschlagt sind, während in dem Fall, daß n durch einen Bruch gebildet ist, einem jeweiligen Stützelement jeweils parallelgeschaltete Drosselkanäle zugeordnet sind.

4. Walze nach Anspruch 2 oder 3, dadurch gekennzeichnet, daß der Drosselkanal (33e) sich in radialer Richtung durch die Zentralachse (1) erstreckt und sich der Strömungs-Querschnitt dieses Drosselkanals (33e) in Strömungsrichtung verengt, so daß er einen sich in Längsrichtung erstreckenden Zuführkanal (28) mit einem Druckraum (32) verbindet, und daß der Drosselkanal (33e) von der dem Druckraum (32) gegenüberliegenden Gegenseite ausgehend in die Zentralachse (1) eingearbeitet ist.

5. Walze nach einem der Ansprüche 1 bis 4, dadurch gekennzeichnet, daß die Zentralachse (1) frei von zusätzlichen, die Drosselkanäle aufnehmenden Bauteilen ist, d.h. die Drosselkanäle unmittelbar in die Zentralachse (1) eingearbeitet sind.

6. Walze nach Anspruch 5 und nach Anspruch 2 oder 3, dadurch gekennzeichnet, daß der Strömungs-Querschnitt des Drosselkanals sich in Strömungsrichtung verengt.

## Claims

1. A roll having a vibration damper, in particular as part of a roll pair, preferably for the manufacture or treatment of fiber webs, in particular paper or card webs, comprising the following features:
a) a stationary central axle (1) extends through a rotatable roll jacket (2);
b) at least one pressure chamber (32) is provided in the central axle (1) and a radially movable support element (31) is arranged therein;
c) the at least one pressure chamber (32) can be filled with a pressure fluid which transfers a hydraulic support force from the central axle (1) to the roll jacket (2) via the support element (31);
d) a feed passage (28) arranged at least partially in the central axle (1) connects a pressure fluid source to the at least one pressure chamber (32) via at least one restrictor passage (33a) with a circular flow cross-section, in particular via a restrictor bore;
e) the liquid volume arranged between the pressure source and the restrictor passage (33a) is variable in accordance with any pressure fluctuations which may occur;
characterized by the following features:
f) the restrictor passage (33a) has a flow cross-section which remains constant in the direction of flow;
g) the factor d² · n⁻¹ has a value between 6mm² and 90mm², with d being the diameter of the restrictor passage and n the number of support elements which is associated with a restrictor passage, n being both larger than or equal to 1 and also smaller than 1, i.e. can also be a fraction, and, in the event that n≧1, one or more support elements respectively being loaded by a pressure fluid via a respective restrictor passage, whereas in the event that n is a fraction, multiple restrictor passages connected in parallel are associated in each case with a respective support element.

2. A roll having a vibration damper, in particular as part of a roll pair, preferably for the manufacture or treatment of fiber webs, in particular paper or card webs, comprising the following features:
a) a stationary central axle (1) extends through a rotatable roll jacket (2);
b) at least one pressure chamber (32) is provided in the central axle (1) and a radially movable support element (31) is arranged therein;
c) the at least one pressure chamber (32) can be filled with a pressure fluid which transfers a hydraulic support force from the central axle (1) to the roll jacket (2) via the support element (31);
d) a feed passage (28) arranged at least partially in the central axle (1) connects a pressure fluid source to the at least one pressure chamber (32) via at least one restrictor passage (33h) with a circular flow cross-section, in particular via a restrictor bore;
e) the liquid volume arranged between the pressure source and the restrictor passage (33h) is variable in accordance with any pressure fluctuations which may occur;
characterized by the following features:
f) the circular flow cross-section of the restrictor passage (33h) varies continuously in the direction of flow, preferably in the form of an increase in cross-section;
g) the relationship d² · n⁻¹ is greater than 6mm² applies to the smallest diameter d₁ of the restrictor passage, with n being the number of support elements which is associated with a restrictor passage, n being both larger than or equal to 1 and also smaller than 1, i.e. can also be a fraction, and, in the event that n≧1, with one or more support elements respectively being loaded by a pressure fluid via a respective restrictor passage, whereas in the event that n is a fraction, multiple restrictor passages connected in parallel are associated in each case with a respective support element.

3. A roll having a vibration damper, in particular as part of a roll pair, preferably for the manufacture or treatment of fiber webs, in particular paper or card webs, comprising the following features:
a) a stationary central axle (1) extends through a rotatable roll jacket (2);
b) at least one pressure chamber (32) is provided in the central axle (1) and a radially movable support element (31) is arranged thereon;
c) the at least one pressure chamber (32) can be filled with a pressure fluid which transfers a hydraulic support force from the central axle (1) to the roll jacket (2) via the support element (31);
d) a feed passage (28) arranged at least partially in the central axle (1) connects a pressure fluid source to the at least one pressure chamber (32) via at least one restrictor passage (33e, 33f) with a circular flow cross-section, in particular via a restrictor bore;
e) the liquid volume arranged between the pressure source and the restrictor passage (33e, 33h) is variable in accordance with any pressure fluctuations which may occur;
characterized by the following features:
f) the circular flow cross-section of the restrictor passage (33e, 33h) varies stepwise in the direction of flow so that it has at least two passage pieces following on from one another with different diameters da, db and with different lengths La, Lb respectively;
g) the sum of the factors da⁴/La · n^{1/4} + db⁴/ Lb · n^{1/4} + ... has a value between 1 and 50mm³, preferably between 2 and 25mm³, with n being the number of support elements which is associated with a restrictor passage, n being both larger than or equal to 1 and also smaller than 1, i.e. can also be a fraction, and, in the event that n≧1, with one or more support elements respectively being loaded by a pressure fluid via a respective restrictor passage, whereas in the event that n is a fraction, multiple restrictor passages connected in parallel are associated in each case with a respective support element.

4. A roll in accordance with claim 2 or claim 3, characterized in that the restrictor passage (33e) extends through the central axle (1) in a radial direction and the flow cross-section of said restrictor passage (33e) reduces in the direction of flow so that it connects a feed passage (28) extending in a longitudinal direction to a pressure chamber (32) and in that the restrictor passage (33e) is worked into the central axle (1) starting from the side opposite the pressure chamber (32).

5. A roll in accordance with one of claims 1 to 4, characterized in that the central axle (1) is free of additional components which accept the restrictor passages, i.e. the restrictor passages are worked directly into the central axle (1).

6. A roll in accordance with claim 5 and in accordance with claim 2 or claim 3, characterized in that the flow cross-section of the restrictor passage reduces in the direction of flow.

## Revendications

1. Cylindre comportant un amortisseur de vibrations, en particulier en tant que partie d'une paire de cylindres, de préférence pour produire ou traiter des nappes de matériau fibreux, en particulier des nappes de papier ou de carton, présentant les éléments suivants :
a) un axe central stationnaire (1) s'étend à travers une enveloppe de cylindre (2) en rotation ;
b) dans l'axe central (1) est prévue au moins une chambre sous pression (32) dans laquelle est agencé un élément de soutien (31) radialement mobile ;
c) ladite au moins une chambre sous pression (32) peut être remplie avec un liquide sous pression qui transmet une force de soutien hydraulique depuis l'axe central (1) par l'élément de soutien (31) jusqu'à l'enveloppe de cylindre (2) ;
d) un canal d'amenée (28) situé du moins en partie dans l'axe central (1) relie une source de liquide sous pression via au moins un canal d'étranglement (33a) à section d'écoulement circulaire, en particulier un perçage d'étranglement, à ladite au moins une chambre sous pression (32) ;
e) le volume de liquide situé entre la source de pression et le canal d'étranglement (33a) est variable en fonction des fluctuations de pression qui apparaissent le cas échéant ;
caractérisé en ce que
f) le canal d'étranglement (33a) possède une section d'écoulement constante en direction d'écoulement ;
g) le facteur d² · n⁻¹ a une valeur entre 6 mm² et 90 mm², d étant le diamètre du canal d'étranglement et n étant le nombre d'éléments de soutien associés à un canal d'étranglement, n étant aussi bien supérieur ou égal à 1 qu'inférieur à 1, c'est-à-dire formé par une fraction, et au cas où n ≥ 1 un ou plusieurs éléments de soutien respectifs sont alimentés en liquide sous pression via un canal d'étranglement respectif, tandis qu'au cas où n est formé par une fraction plusieurs canaux d'étranglement respectifs branchés en parallèle sont associés à l'élément de soutien respectif.

2. Cylindre comportant un amortisseur de vibrations, en particulier en tant que partie d'une paire de cylindres, de préférence pour produire ou traiter des nappes de matériau fibreux, en particulier des nappes de papier ou de carton, présentant les éléments suivants :
a) un axe central stationnaire (1) s'étend à travers une enveloppe de cylindre (2) en rotation ;
b) dans l'axe central (1) est prévue au moins une chambre sous pression (32) dans laquelle est agencé un élément de soutien (31) radialement mobile ;
c) ladite au moins une chambre sous pression (32) peut être remplie avec un liquide sous pression qui transmet une force de soutien hydraulique depuis l'axe central (1) par l'élément de soutien (31) jusqu'à l'enveloppe de cylindre (2) ;
d) un canal d'amenée (28) situé du moins en partie dans l'axe central (1) relie une source de liquide sous pression via au moins un canal d'étranglement (33h) à section d'écoulement circulaire, en particulier un perçage d'étranglement, à ladite au moins une chambre sous pression (32) ;
e) le volume de liquide situé entre la source de pression et le canal d'étranglement (33h) est variable en fonction des fluctuations de pression qui apparaissent le cas échéant ;
caractérisé en ce que
f) la section d'écoulement circulaire du canal d'étranglement (33h) se modifie en continu en direction d'écoulement, de préférence sous forme d'un évasement de la section ;
g) pour le plus petit diamètre d₁ du canal d'étranglement, le facteur d₁² · n⁻¹ est supérieur à 6 mm², n étant le nombre d'éléments de soutien associés à un canal d'étranglement, n étant aussi bien supérieur ou égal à 1 qu'inférieur à 1, c'est-à-dire formé par une fraction, et au cas où n ≥ 1 un ou plusieurs éléments de soutien respectifs sont alimentés en liquide sous pression via un canal d'étranglement respectif, tandis qu'au cas où n est formé par une fraction plusieurs canaux d'étranglement respectifs branchés en parallèle sont associés à l'élément de soutien respectif.

3. Cylindre comportant un amortisseur de vibrations, en particulier en tant que partie d'une paire de cylindres, de préférence pour produire ou traiter des nappes de matériau fibreux, en particulier des nappes de papier ou de carton, présentant les éléments suivants :
a) un axe central stationnaire (1) s'étend à travers une enveloppe de cylindre (2) en rotation ;
b) dans l'axe central (1) est prévue au moins une chambre sous pression (32) dans laquelle est agencé un élément de soutien (31) radialement mobile ;
c) ladite au moins une chambre sous pression (32) peut être remplie avec un liquide sous pression qui transmet une force de soutien hydraulique depuis l'axe central (1) par l'élément de soutien (31) jusqu'à l'enveloppe de cylindre (2) ;
d) un canal d'amenée (28) situé du moins en partie dans l'axe central (1) relie une source de liquide sous pression via au moins un canal d'étranglement (33e, 33f) à section d'écoulement circulaire, en particulier un perçage d'étranglement, à ladite au moins une chambre sous pression (32) ;
e) le volume de liquide situé entre la source de pression et le canal d'étranglement (33e, 33f) est variable en fonction des fluctuations de pression qui apparaissent le cas échéant ;
caractérisé en ce que
f) la section d'écoulement circulaire du canal d'étranglement (33e, 33f) se modifie par gradins en direction d'écoulement, de manière à présenter au moins deux tronçons de canal successifs de diamètres différents da, db et d'une longueur respective La, Lb ;
g) la somme des facteurs da⁴ / La · n^{1/4} + db⁴ / Lb · n^{1/4} + ... a une valeur entre 1 et 50 mm³, de préférence entre 2 et 25 mm³, n étant le nombre d'éléments de soutien associés à un canal d'étranglement, n étant aussi bien supérieur ou égal à 1 qu'inférieur à 1, c'est-à-dire formé par une fraction, et au cas où n ≥ 1 un ou plusieurs éléments de soutien respectifs sont alimentés en liquide sous pression via un canal d'étranglement respectif, tandis qu'au cas où n est formé par une fraction plusieurs canaux d'étranglement respectifs branchés en parallèle sont associés à l'élément de soutien respectif.

4. Cylindre selon l'une ou l'autre des revendications 2 et 3, caractérisé en ce que le canal d'étranglement (33e) s'étend en direction radiale à travers l'axe central (1), et la section d'écoulement de ce canal d'étranglement (33e) se rétrécit en direction d'écoulement, de manière à relier un canal d'amenée (28) s'étendant en direction longitudinale à une chambre sous pression (32), et en ce que le canal d'étranglement (33e) est ménagé dans l'axe central (1) à partir du côté opposé à la chambre sous pression (32).

5. Cylindre selon l'une quelconque des revendications 1 à 4, caractérisé en ce que l'axe central (1) est exempt de composants supplémentaires recevant les canaux d'étranglement, c'est-à-dire que les canaux d'étranglement sont ménagés directement dans l'axe central (1).

6. Cylindre selon la revendication 5 et selon l'une ou l'autre des revendications 2 et 3, caractérisé en ce que la section d'écoulement du canal d'étranglement se rétrécit en direction d'écoulement.
